# EUROPEAN PATENT APPLICATION

(11) **EP 2 442 453 A1**
(43) Date of publication of application: **18.04.2012**
(21) Application number: 10786247.6
(22) Date of filing: 11.06.2010
(51) Int. Cl.: H04B 1/16, H04W 16/32, H04W 24/10, H04W 88/02

(54) **RECEIVING STATION AND MOBILE COMMUNICATION METHOD**

(30) Priority: 12.06.2009 JP 2009141481
(71) Applicant: NTT DOCOMO, INC., Chiyoda-ku Tokyo 100-6150 (JP)
(72) Inventor: ZUKAWA, Hiroki, Tokyo 100-6150 (JP)
(74) Representative: HOFFMANN EITLE
(86) International application number: PCT/JP2010/059957
(87) International publication number: WO 2010/143716

(57) **Abstract**

A receiver according to the present invention includes a frequency selection unit 11 configured to select a first frequency in which a radio quality is measured, a receiving unit 12 configured to receive a signal at the first frequency transmitted around the receiver, a cell search unit 13 configured to perform cell search to detect the received signal, a broadcast information acquisition unit 14 configured to decode and acquire broadcast information on a path detected, a radio quality estimation unit 15 configured to estimate a radio quality of a second cell which transmitted at a second frequency, on the basis of the information from the cell search unit and the broadcast information acquisition unit, the second cell being overlaid on a first cell which transmitted at the first frequency, and a radio quality data storage unit 16 configured to store the information from the cell search unit 13, the broadcast information acquisition unit 14 and the radio quality estimation unit 15.

## Description

### TECHNICAL FIELD

The present invention relates to a receiver and a mobile communication method.

### BACKGROUND ART

Conventionally, there is a case where multiple cells are installed in an overlay manner.

### PRIOR ART DOCUMENT

### PATENT DOCUMENT

Patent Document 1: International Patent Application Publication No. WO2006-100994

### SUMMARY OF THE INVENTION

### PROBLEM TO BE SOLVED BY THE INVENTION

In mobile communication systems, a receiver (mobile station or radio base station) is capable of executing highly-sophisticated processing by acquiring radio qualities around the receiver. Such a receiver acquires, for each available frequency, a scrambling code, a reception power of a reference channel, broadcast information or the like of each of cells around the receiver and is thus capable of selecting an operation parameter in accordance with the acquired result, for example.

In order for the receiver to measure radio qualities of signals received from cells around the receiver, the receiver needs to perform cell search processing for each of the received signals.

The receiver, however, cannot detect a signal from a cell using a communication system different from a communication system usable in the receiver.

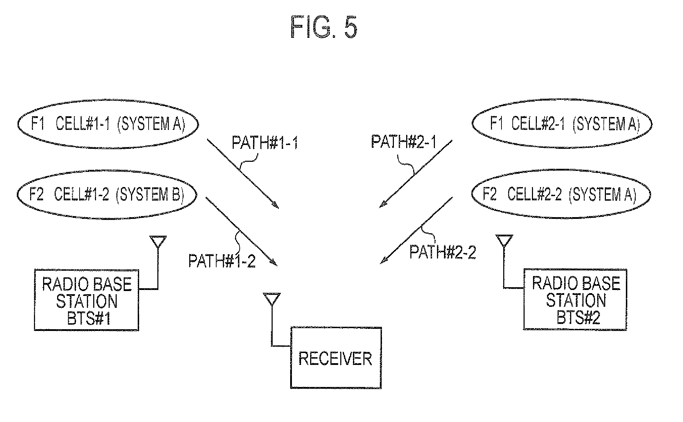

As shown in FIG. 5, for example, in the mobile communication system, the receiver supporting a system A (W-CDMA system, for example) cannot decode a signal transmitted from a cell #1-2 in a case where a cell #1-1 under a radio base station BTS #1 is a cell using the system A (W-CDMA system, for example) operated at a frequency F1, the cell #1-2 under the radio base station BTS #1 is a cell using a system B (LTE (Long Term Evolution) system, for example) operated at a frequency F2, a cell #2-1 under a radio base station BTS #2 is a cell using the system A (W-CDMA system, for example) operated at the frequency F1, and a cell #2-2 under the radio base station BTS #2 is a cell using the system A (W-CDMA system, for example) operated at the frequency F2.

Accordingly, when performing cell search in the frequency F1, the receiver using the system A (W-CDMA system, for example) can detect the cell #1-1 and the cell #2-1. However, when performing cell search in the frequency F2, the receiver can detect the cell #2-2 but cannot detect the cell #1-2. Thus, there arises a problem that the radio quality cannot be correctly measured.

In this respect, the present invention has been made in view of the aforementioned problem, and an objective of the present invention is to provide a receiver and a mobile communication method each of which is capable of estimating the radio quality of a signal transmitted in a specific cell, without decoding the signal.

### MEANS FOR SOLVING THE PROBLEM

The first feature of the present invention is summarized in that a receiver including: a frequency selection unit configured to select a first frequency in which a radio quality is measured; a receiving unit configured to receive a signal at the first frequency transmitted around the receiver; a cell search unit configured to perform cell search to detect the signal received by the receiving unit; a broadcast information acquisition unit configured to decode and acquire broadcast information on a path detected by the cell search unit; a radio quality estimation unit configured to estimate a radio quality of a second cell which transmitted at a second frequency, on the basis of the information from the cell search unit and the broadcast information acquisition unit, the second cell being overlaid on a first cell which transmitted at the first frequency; and a radio quality data storage unit configured to store the information from the cell search unit, the broadcast information acquisition unit and the radio quality estimation unit.

The second feature of the present invention is summarized in that a mobile communication method including: step A of selecting a first frequency in which a receiver measures a radio quality; step B of receiving a signal at the first frequency transmitted around the receiver; step C of performing cell search processing to detect the signal received in step B; step D of decoding and acquiring broadcast information on a path detected in step C; step E of estimating a radio quality of a second cell which transmitted at a second frequency, on the basis of the information detected in step C and the information acquired in step D, the second cell being overlaid on a cell which transmitted at the first frequency; step F of storing the information detected in step C, the information acquired in step D and the information estimated in step E; and step G of estimating a radio quality of a cell belonging to a frequency in which the receiver does not measure a radio quality.

### EFFECT OF THE INVENTION

As described above, according to the present invention, it is possible to provide a receiver and a mobile communication method each of which is capable of estimating the radio quality of a signal transmitted in a specific cell, without decoding the signal.

### BRIEF DESCRIPTION OF DRAWINGS

[FIG. 1] FIG. 1 is an overall configuration diagram of a mobile communication system according to a first embodiment of the present invention.
[FIG. 2] FIG. 2 is a functional block diagram of a receiver according to the first embodiment of the present invention.
[FIG. 3] FIG. 3 is a flowchart showing an operation of the receiver according to the first embodiment of the present invention.
[FIG. 4] FIG. 4 is an overall configuration diagram of a mobile communication system according to modified embodiment 1 of the present invention.
[FIG. 5] FIG. 5 is a diagram for describing a problem with a conventional receiver.

### MODE FOR CARRYING OUT THE INVENTION

### (Configuration of Mobile Communication System According to First Embodiment of the Present Invention)

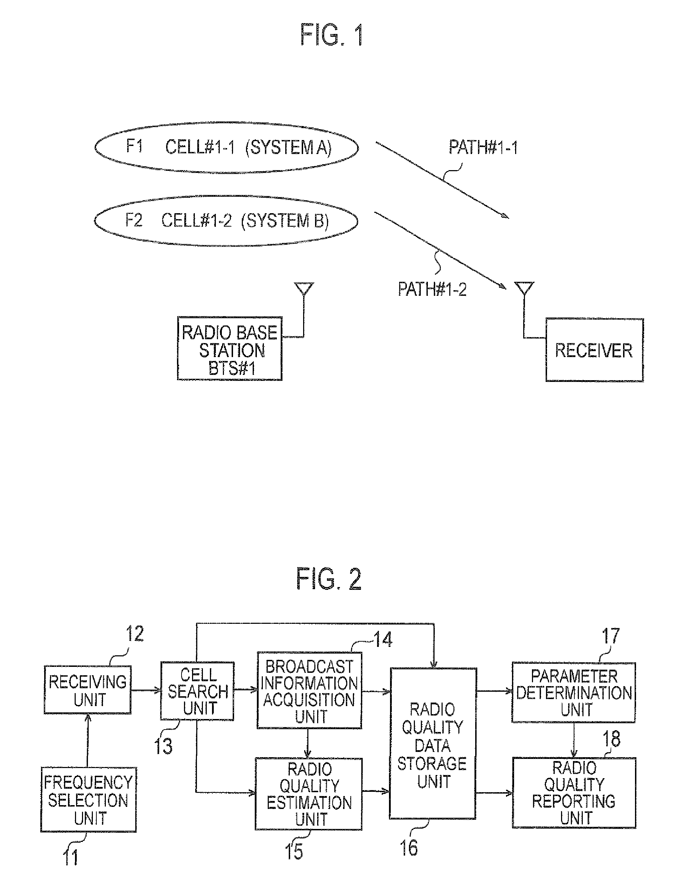

A description will be given of a configuration of a mobile communication system according to a first embodiment of the present invention with reference to FIG. 1 and FIG. 2.

As shown in FIG. 1, in a mobile communication system according to the first embodiment, a cell #1-1 and a cell #1-2 under a radio base station BTS #1 are overlaid one on top of another, and a signal with a frequency F1 (first frequency) is transmitted in the cell #1-1 and a signal with a frequency F2 (second frequency) is transmitted in the cell #1-2.

In the example shown in FIG. 1, the cell #1-1 is a cell using a system A and the cell #1-2 is a cell using a system B, and the cell #1-1 and the cell #1-2 may be cells using different communication systems, respectively. Each of the systems A and B may be the W-CDMA system, LTE system, GSM system, PDC system or other communication systems, for example.

In addition, the cell #1-1 and the cell #1-2 may belong to different frequency bands, respectively. Each of the cell #1-1 and the cell #1-2 may belong to the 2 GHz band, 800 MHz band, 1.7 GHz band, 1.5 GHz band or other frequency bands, for example.

Note that, the cell #1-1 and the cell #1-2 are covered by the same radio base station BTS #1 in the example shown in FIG. 1, but the cell #1-1 and the cell #1-2 may be covered by different radio base stations BTSs, respectively.

As shown in FIG. 2, a receiver (radio base station BTS or mobile station UE) includes a frequency selection unit 11, a receiving unit 12, a cell search unit 13, a broadcast information acquisition unit 14, a radio quality estimation unit 15 and a radio quality data storage unit 16.

In addition to the aforementioned components, the receiver may include a parameter determination unit 17 and a radio quality reporting unit 18.

The frequency selection unit 11 is configured to select a frequency in which the receiver measures a radio quality.

The receiver may previously store a selection target frequency, as a list, or may be informed of the selection target frequency by an upper node.

The receiving unit 12 is configured to receive a radio signal transmitted at a frequency selected by the frequency selection unit 11.

The cell search unit 13 is configured to detect a path by performing cell search for the radio signal received by the receiving unit 12.

Examples of the information to be acquired by the cell search include a radio frame timing, a reception power of a reference channel (PCPICH in the case of the W-CDMA system or Reference Signal in the case of LTE), scrambling code (in the case of the W-CDMA system), a system bandwidth (in the case of LTE) and the like.

The broadcast information acquisition unit 14 is configured to decode and acquire broadcast information on each path acquired by the cell search unit 13.

To put it more specifically, the broadcast information acquisition unit 14 is configured to acquire, in addition to cell information on the cell #1-1 (transmission power of the reference channel or the like, for example), information indicating the presence or absence of a cell overlaid on the cell #1-1 and cell information on the cell #1-2 overlaid on the cell #1-1 from the broadcast information transmitted in the cell #1-1.

The radio quality estimation unit 15 is configured to estimate a radio quality of another cell overlaid on the cell on the basis of the information from the cell search unit 13 and the broadcast information acquisition unit 14.

The radio quality estimation unit 15 may be configured to calculate, for acquiring a reception power as the radio quality, a reception power "R2" of the cell #1-2 by formula "R2 = R1 * T2 / T1," where a reception power of the cell #1-1 in frequency F1 is "R1", a transmission power of the cell #1-1 is "T1" and a transmission power of the cell #1-2 is "T2".

Moreover, the radio quality estimation unit 15 may be configured to estimate, in a case where the frequency bands of the frequency F1 and the frequency F2 are different, the reception power of the cell #1-2 while making a correction with a coefficient in consideration of a difference in the amount of attenuation between the frequency F1 and the frequency F2.

Note that, the receiver may previously store the coefficient used for the correction, as a list, or may be informed of the coefficient by an upper node.

The radio quality data storage unit 16 is configured to store the information from the cell search unit 13, the broadcast information acquisition unit 14 and the radio quality estimation unit 15.

The parameter determination unit 17 is configured to determine an operation parameter of the receiver on the basis of the information stored by the radio quality data storage unit 16.

The radio quality reporting unit 18 is configured to report the information stored by the radio quality data storage unit 16 to an upper node.

### (Operation of Mobile Communication System According to First Embodiment of the Present Invention)

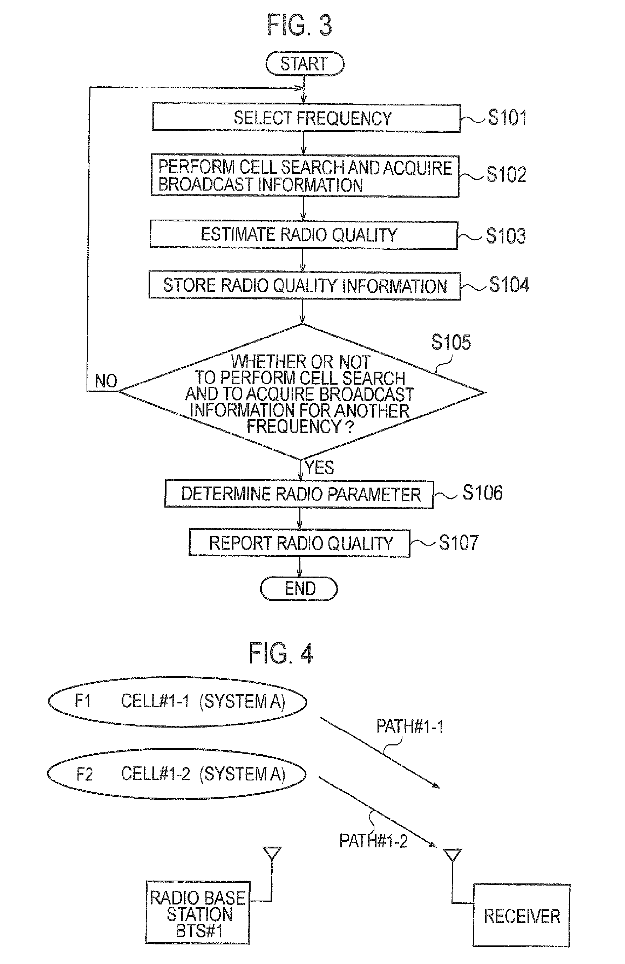

Hereinafter, a description will be given of an operation of the mobile communication system according to the present embodiment, i.e., an operation of the receiver according to the present embodiment with reference to FIG. 3.

As shown in FIG. 3, in step S101, the receiver selects a frequency in which a radio quality is measured.

In step S102, the receiver performs cell search for the frequency selected in step S101 and also acquires broadcast information on a part of or all of the paths.

In a case where the receiver acquires a reception power as the radio quality, for example, when selecting the frequency F1 in step S101, the receiver detects a path #1-1 by the cell search and acquires the reception power. Thus, the receiver acquires the reception power R1 of the path #1-1.

Then, by acquire broadcast information, the receiver acquires the transmission power T1 of the path #1-1, the frequency F2 and the transmission power T2 of the cell #1-2 overlaid on the cell #1-1,

In step S103, the receiver estimates the reception power R2 of the cell #1-2 overlaid on the cell #1-1 to be "R2 = R1 * T2 / T1" on the basis of the information acquired in step S102.

Note that, the receiver may estimate the reception power R2 to be "R2 = R1 * T2 / T1 * α" by using a coefficient a in consideration of a difference in the amount of attenuation in radio propagation due to a frequency difference between the frequency F1 and the frequency F2 (where a is the coefficient used for correcting the difference in the amount of attenuation for each frequency).

In step S104, the receiver stores therein the information acquired in step S103.

In step S105, the receiver determines whether or not to perform the cell search in another frequency, and when the receiver determines to perform the cell search in the other frequency, the operation proceeds to step S101. Meanwhile, when the receiver determines not to perform the cell search in the other frequency, the operation proceeds to step S106.

In step S106, the receiver determines a parameter used for the operation.

In step S107, the receiver reports the radio quality to an upper node.

### (Operational Effects of Mobile Communication System According to First Embodiment of the Present Invention)

With the mobile communication system according to the first embodiment of the present invention, it is possible to estimate the radio quality of the cell #1-2 without decoding a signal transmitted in the cell #1-2 overlaid on the peripheral cell #1-1.

### (Modified Embodiment 1)

Referring to FIG. 4, a description will be given of a mobile communication system according to modified embodiment 1 of the present invention with a focus on a difference from the aforementioned mobile communication system according to the first embodiment.

As shown in FIG. 4, in the mobile communication system according to modified embodiment 1, the cell #1-1 and the cell #1-2 are cells using the same communication system. The communication system of the cell #1-1 and the cell #1-2 may be the W-CDMA system, LTE system, GSM system, PDC system or other communication systems.

In this case, the receiver can measure radio qualities at both frequencies of the frequency F1 and the frequency F2 for the purpose of measuring the radio qualities of the cell #1-1 and the cell #1-2. However, the receiver can measure only the radio quality of the frequency F1 and then estimate the radio quality of the cell #1-2 overlaid on the cell #1-1 from the result of the measurement.

Likewise, the receiver can measure only the radio quality of the frequency F2 and then estimate the radio quality of the cell #1-1 overlaid on the cell #1-2 from the result of the measurement.

The characteristic features of the embodiment described above may be expressed in the following manner.

A first aspect of the present embodiment is summarized as a receiver including: the frequency selection unit 11 configured to select a first frequency in which a radio quality is measured; the receiving unit 12 configured to receive a signal at the first frequency transmitted around the receiver; the cell search unit 13 configured to perform cell search to detect the signal received by the receiving unit 12; the broadcast information acquisition unit 14 configured to decode and acquire broadcast information on a path detected by the cell search unit 13; the radio quality estimation unit 15 configured to estimate a radio quality of a second cell which transmitted at a second frequency, on the basis of the information from the cell search unit 13 and the broadcast information acquisition unit 14, the second cell being overlaid on a first cell where transmission is performed at the first frequency; and the radio quality data storage unit 16 configured to store the information from the cell search unit 13, the broadcast information acquisition unit 14 and the radio quality estimation unit 15.

In the first aspect of the present embodiment, the receiver may further include the parameter determination unit 17 configured to determine an operation parameter for the receiver on the basis of the information stored in the radio quality data storage unit 16.

In the first aspect of the present embodiment, the receiver further includes the radio quality reporting unit 18 configured to report the radio quality to an upper node on the basis of the information stored in the radio quality data storage unit 16.

In the first aspect of the present embodiment, the radio quality estimation unit 15 may estimate the radio quality by using a correction coefficient for each frequency.

In the first aspect of the present embodiment, a signal transmitted in the first cell and a signal transmitted in the second cell may be signals of the same communication system or signals of different communication systems, respectively.

A second aspect of the present embodiment is summarized as a mobile communication method including: step A of selecting a first frequency in which a receiver measures a radio quality; step B of receiving a signal at the first frequency transmitted around the receiver; step C of performing cell search to detect the signal received in step B; step D of decoding and acquiring broadcast information on a path detected in step C; step E of estimating a radio quality of a second cell which transmitted at a second frequency, on the basis of the information detected in step C and the information acquired in step D, the second cell being overlaid on a cell which transmitted at the first frequency; step F of storing the information detected in step C, the information acquired in step D and the information estimated in step E; and step G of estimating a radio quality of a cell belonging to a frequency in which the receiver does not measure a radio quality.

In the second aspect of the present embodiment, the mobile communication method may further include a step of determining an operation parameter for the receiver on the basis of the information stored in step G.

In the second aspect of the present embodiment, the mobile communication method may further include a step of reporting the radio quality to an upper node on the basis of the information stored in step G.

In the second aspect of the present embodiment, the radio quality may be estimated by using a correction coefficient for each frequency in step E.

In the second aspect of the present embodiment, a signal transmitted in the first cell and a signal transmitted in the second cell may be signals of the same communication system or signals of different communication systems, respectively.

Note that operations of the above-described receiver (radio base station BTS or mobile station UE) may be implemented by hardware or may be implemented by a software module to be executed by a processor, or may be implemented in combination of the both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the receiver (radio base station BTS or mobile station UE). Also, the storage medium and the processor may be provided in the receiver (radio base station BTS or mobile station UE) as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

Note that the contents of Japanese Patent Application No. 2009-141481 (filed on June 12, 2009) are incorporated herein by reference in their entirety.

### INDUSTRIAL APPLICABILITY

As described above, with the receiver and the mobile communication method according to the present invention, it is made possible to estimate a radio quality of a signal transmitted in a specific cell, without decoding the signal. Thus, the receiver and the mobile communication method according to the present invention are useful in radio communications.

### EXPLANATION OF REFERENCE NUMERALS

- BTS: RADIO BASE STATION
- 11: FREQUENCY SELECTION UNIT
- 12: RECEIVING UNIT
- 13: CELL SEARCH UNIT
- 14: BROADCAST INFORMATION ACQUISITION UNIT
- 15: RADIO QUALITY ESTIMATION UNIT
- 16: RADIO QUALITY DATA STORAGE UNIT
- 17: PARAMETER DETERMINATION UNIT
- 18: RADIO QUALITY REPORTING UNIT

## Claims

1. A receiver comprising:
a frequency selection unit configured to select a first frequency in which a radio quality is measured;
a receiving unit configured to receive a signal at the first frequency transmitted around the receiver;
a cell search unit configured to perform cell search to detect the signal received by the receiving unit;
a broadcast information acquisition unit configured to decode and acquire broadcast information on a path detected by the cell search unit;
a radio quality estimation unit configured to estimate a radio quality of a second cell which transmitted at a second frequency, on the basis of the information from the cell search unit and the broadcast information acquisition unit, the second cell being overlaid on a first cell which transmitted at the first frequency; and
a radio quality data storage unit configured to store the information from the cell search unit, the broadcast information acquisition unit and the radio quality estimation unit.

2. The receiver according to claim 1, further comprising a parameter determination unit configured to determine an operation parameter for the receiver on the basis of the information stored in the radio quality data storage unit.

3. The receiver according to any one of claims 1 and 2, further comprising a radio quality reporting unit configured to report the radio quality to an upper node on the basis of the information stored in the radio quality data storage unit.

4. The receiver according to any one of claims 1 to 3, wherein the radio quality estimation unit estimates the radio quality by using a correction coefficient for each frequency.

5. The receiver according to any one of claims 1 to 4, wherein a signal transmitted in the first cell and a signal transmitted in the second cell are signals of the same communication system.

6. The receiver according to any one of claims 1 to 4, wherein a signal transmitted in the first cell and a signal transmitted in the second cell are signals of different communication systems, respectively.

7. A mobile communication method comprising:
step A of selecting a first frequency in which a receiver measures a radio quality;
step B of receiving a signal at the first frequency transmitted around the receiver;
step C of performing cell search to detect the signal received in step B;
step D of decoding and acquiring broadcast information on a path detected in step C;
step E of estimating a radio quality of a second cell which transmitted at a second frequency, on the basis of the information detected in step C and the information acquired in step D, the second cell being overlaid on a cell which transmitted at the first frequency;
step F of storing the information detected in the step C, the information acquired in step D and the information estimated in step E; and
step G of estimating a radio quality of a cell belonging to a frequency in which the receiver does not measure a radio quality.

8. The mobile communication method according to claim 7, further comprising a step of determining an operation parameter for the receiver on the basis of the information stored in step G.

9. The mobile communication method according to any one of claims 7 and 8, further comprising a step of reporting the radio quality to an upper node on the basis of the information stored in step G.

10. The mobile communication method according to any one of claims 7 to 9, wherein the radio quality is estimated by using a correction coefficient for each frequency in step E.

11. The mobile communication method according to any one of claims 7 to 10, wherein a signal transmitted in the first cell and a signal transmitted in the second cell are signals of the same communication system.

12. The mobile communication method according to any one of claims 7 to 10, wherein a signal transmitted in the first cell and a signal transmitted in the second cell are signals of different communication systems, respectively.
